# EUROPEAN PATENT SPECIFICATION

(11) **EP 2 582 588 B1**
(45) Date of publication and mention of the grant of the patent: **23.03.2016**
(21) Application number: 11795902.3
(22) Date of filing: 25.05.2011
(51) Int. Cl.: B65D 30/24, B65D 81/20, B32B 27/08, B65D 33/25

(54) **VACUUM VALVE AND METHOD OF MANUFACTURING THE SAME**
VAKUUMVENTIL UND VERFAHREN ZU SEINER HERSTELLUNG
SOUPAPE À VIDE ET SON PROCÉDÉ DE FABRICATION

(30) Priority: 16.06.2010 KR 20100057083
(43) Date of publication of application: 24.04.2013
(73) Proprietor: Rollpack Co., Ltd., Gyeonggi-do 451-822 (KR)
(72) Inventor: SO, Jae-Gwang, Pyeongtaek-si Gyeonggi-do 451-822 (KR); KIM, Kum-Ja, Ansan-si Gyeonggi-do 425-020 (KR)
(74) Representative: Bongiovanni, Simone
(86) International application number: PCT/KR2011/003838
(87) International publication number: WO 2011/159036

(56) References cited:
- WO-A2-2008/076605
- KR-A- 20080 029 959
- US-A1- 2006 228 057
- US-A1- 2009 008 582

## Description

### Technical Field

The present invention relates to a valve used in a storage container, and more particularly, to a valve allowing air to be withdrawn from the inside of the storage container and preventing air from being drawn thereinto.

### Background Art

A storage container may be a vinyl bag, which is foldable, allows an object stored therein to be removed therefrom, is flexible, and prevents air leakage. The storage container may include a resealable opening through which an object may be inserted, and a valve through which air may be withdrawn. A user may insert an object into the bag through the opening and cause the opening to be sealed and air in the bag to be withdrawn through the valve. Accordingly, the movement of an object contained and compressed in the storage container, in which air has been withdrawn, in the manner of a compression bag, may be facilitated and a relatively small storage space may be required therefor.

A storage container, which is foldable and allows an object stored therein to be removed therefrom, compresses the stored object by removing air therefrom and inhibits the growth of harmful bacteria and mold due to the removal of air.

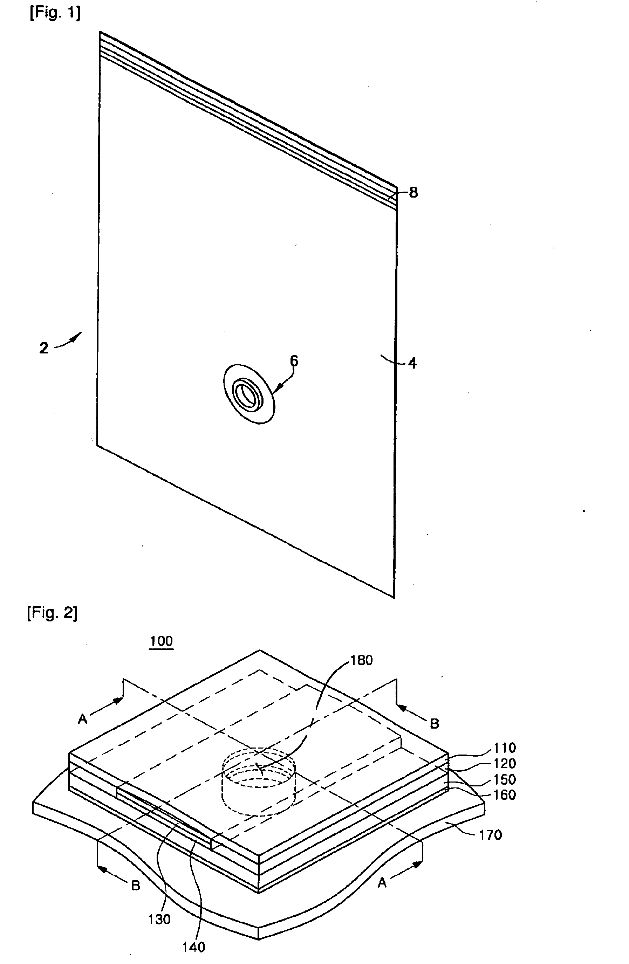

A storage container of FIG. 1 may be utilized. This storage container may include a container 4, a valve 6, and a zipper 8 having a pair of protruding zipper strips engaged with each other in an end portion of the container 4.

A surface of the container 4 has a hole (not shown in FIG. 1) for the installation of the valve 6. The container 4 may be formed of a polyethylene-containing layer inserted between a nylon layer and a polyethylene sheet layer. However, the material of the container 4 may be varied in order to prevent interactions with a material of an object or substance to be contained in the container 4.

When the zipper 8 is open, one or more substance (not shown) may be inserted into the container 4 through the zipper strips to be engaged with each other. After the object or substance to be stored is inserted into the container 4, the container 4 may be sealed by pressing the profiles of the zipper strips so as to be engaged with each other.

The container 4 may be sealed by the closure of the zipper 8. Then, air in the container 4 may be withdrawn therefrom through the unidirectional valve 6. Here, air may be withdrawn from the container 4 through the valve 6 using an existing vacuum generating source such as a household or industrial vacuum cleaner. The valve 6 and the zipper 8 may allow a vacuum state to be maintained within the container 4 after the removal of the vacuum generating source.

As shown in FIG. 1, the valve 6, which is a structure having a predetermined shape, should allow air to be withdrawn from and prevent the inflow of air into the container, and thus, it has a complicated configuration, occupies a large amount of volume and space, increases manufacturing costs, and has difficulties when being installed in the container.

Document WO 2008/076605 discloses a vacuum valve as defined in the preamble of claim 1.

### [Disclosure of Invention]

### [Technical Problem]

An aspect of the present invention provides a vacuum valve used in a vacuum storage container, having a simplified configuration, being installable in the container, improved in vacuum maintenance, and facilitated in the manufacturing thereof, and a method of manufacturing the same.

### [Solution to Problem]

According to an aspect of the present invention, there is provided a vacuum valve including: a base having a hole; a sealing film attached to a flexible film and covering the hole between the base and the flexible film; and the flexible film attached to an upper surface of the base and the sealing film using an adhesive layer, wherein the flexible film is movable to an open position, and when the flexible film is disposed in the open position, the sealing film attached to the flexible film causes the hole to be open and an air path is formed between the sealing film and the base such that air passes therethrough.The sealing film and the base have an oil layer disposed therebetween.

The adhesive layer may have a band shape while being disposed along an edge portion of the base.

The flexible film may be bulged outwardly in the open position.

The flexible film may be formed of an oriented poly propylene (OPP) resin or a polyethylene terephthalate (PET) resin.

According to another aspect of the present invention, there is provided a method of manufacturing a vacuum valve, as defined in claim 5.

According to another aspect of the present invention, there is provided a vacuum storage container including: an opening through which an object is inserted; a sealing unit sealing the opening; and the vacuum valve as described above, the vacuum valve attached to a surface of the vacuum storage container.

### Advantageous Effects of Invention

As set forth above, according to embodiments of the invention, a vacuum valve, even with a simplified configuration, may provide improved vacuum maintenance.

Since no rigid material is used, damage to a container by the valve may be prevented and only a small storage space may be required therefor.

A method of manufacturing a vacuum valve according to an embodiment of the invention may allow for simplified manufacturing processes and the manufacturing of a vacuum valve having improved performance even with reduced manufacturing costs.

### Brief Description of Drawings

FIG. 1 is a schematic perspective view of a container having a valve installed therein according to the related art;
FIG. 2 is a schematic perspective view of a vacuum valve according to an embodiment of the present invention;
FIG. 3 is an exploded perspective view of a vacuum valve according to an embodiment of the present invention;
FIG. 4 is a cross-sectional view of a flexible film in a closed position, taken along line A-A of FIG. 2;
FIG. 5 is a cross-sectional view of the flexible film in an open position, taken along line A-A of FIG. 2;
FIG. 6 is a cross-sectional view of the flexible film in a closed position, taken along line B-B of FIG. 2;
FIG. 7 is a cross-sectional view of the flexible film in an open position, taken along line B-B of FIG. 2; and

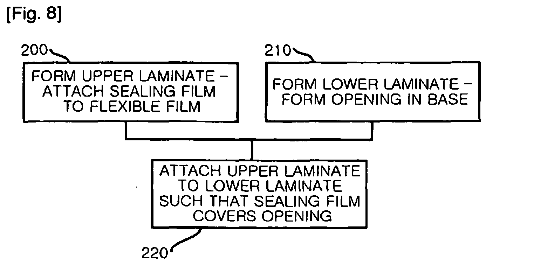

FIG. 8 is a flowchart illustrating a method of manufacturing a vacuum valve according to an embodiment of the present invention.

### Mode for the Invention

Embodiments of the present invention will now be described in detail with reference to the accompanying drawings.

The invention may, however, be embodied in many different forms and should not be construed as being limited to the embodiments set forth herein. Rather, these embodiments are provided so that this disclosure will be thorough and complete, and will fully convey the scope of the invention to those skilled in the art.

The invention provides a combination of a thin film and an adhesive layer both having a thickness of micrometers (*µ*m), the thickness of which may not be readily apparent to the naked eye. However, in order to help in an understanding of the invention, in FIGS. 2 through 7, the distribution of individual layers is exaggerated for clarity.

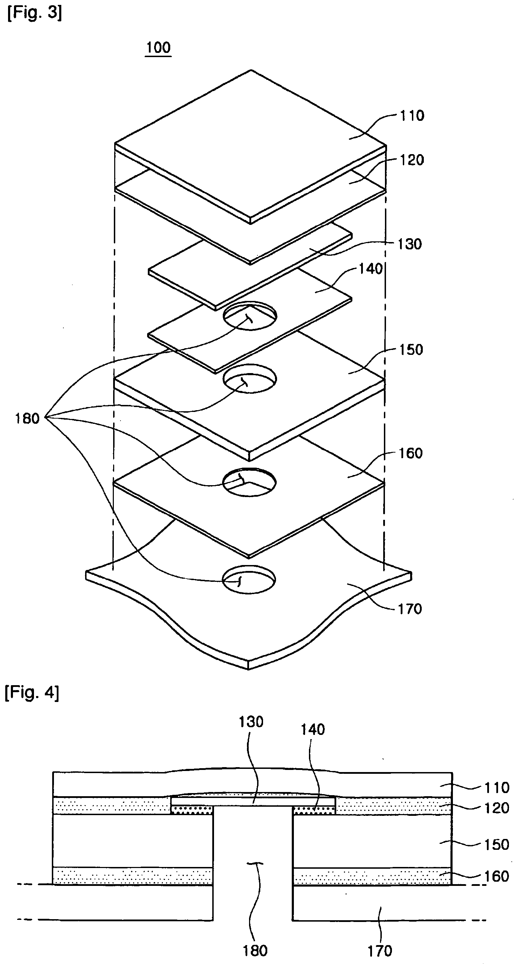

As shown in FIGS. 2 and 3, a vacuum valve 100 is formed by attaching a base 150 to a container surface 170 using an adhesive layer 160. The container surface 170, the adhesive layer 160 and the base 150 have a hole 180 formed therein.

The description of the present embodiment is provided based on a state in which the vacuum valve 100 is attached to the container surface 170. However, the vacuum valve 100 is manufactured in a state in which it is attached to a release paper rather than the container surface 170, and prior to being attached to the container surface 170, the release paper is removed and the adhesive layer 160 is attached to the container surface 170.

An oil layer 140 is disposed around the hole 180 of the base 150, and the oil layer 140 also has the same hole 180 as the base 150. A sealing film 130 is disposed on the oil layer 140. An adhesive layer 120 is provided at edge portions of the oil layer 140 and the sealing film 130. This adhesive layer 120 allows for attachment between the sealing film 130 and the flexible film 110 and attachment between the base 150 and the flexible film 110.

According to this embodiment, the stack of the above-described films and layers provides a valve allowing for the creation and maintenance of a vacuum state with a simplified structure.

In the present embodiment, the hole 180 is disposed at the center of the base 150, and the sealing film 130 and the oil layer 140 are provided in a rectangular shape having the hole 180 as the center thereof. Accordingly, the adhesive layer 120 is shaped like a band from edges of the sealing film 130 and the oil layer 140 to edges of the base 150. Since the adhesive layer 120 at the edge portions of the base 150 has a band shape, an air path may be formed to allow air to pass through the hole 180.

The thickness of the base 150 may be determined according to necessity. In the present embodiment, the base 150 has a thickness of approximately 200 *µ*m. The flexible film 110 and the sealing film 130 may be relatively thin as compared to the base 150. Since the flexible film 110 and the sealing film 130 are required to be movable between an open position and a closed position, as will be described below, they may have an appropriate thickness for transformability according to the characteristics of a material. For example, the flexible film 110 and the sealing film 130 may be formed of a polyethylene terephthalate (PET) resin and have a thickness of approximately 25 *µ*m, or the flexible film 110 may be formed of an oriented poly propylene (OPP) resin and have a thickness of approximately 40 *µ*m and the sealing film 130 may be formed of a PET resin and have a thickness of approximately 25 *µ*m.

FIGS. 4 through 7 show the operation of a vacuum valve according to an embodiment of the invention. In an embodiment of the invention, the flexible film 110 and the sealing film 130 attached to the flexible film 110 may be movable between the open position and the closed position.

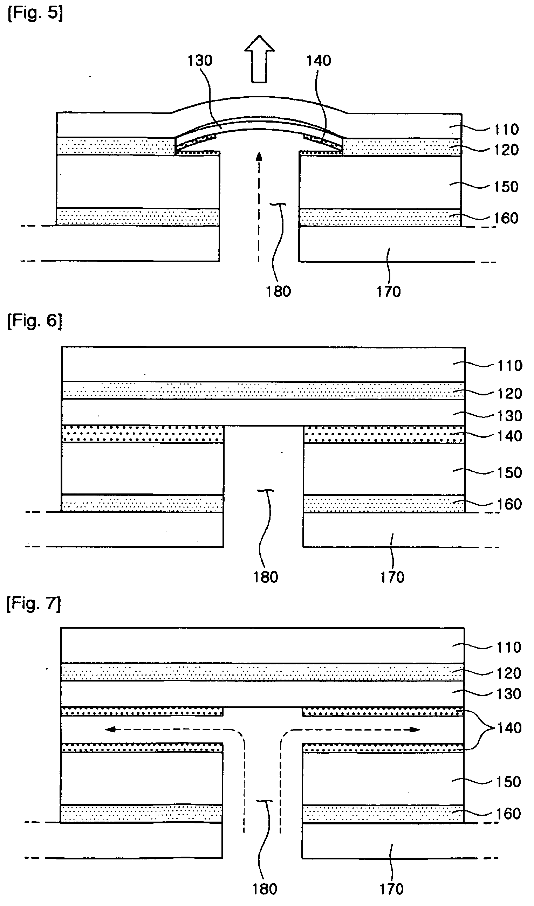

As shown in FIGS. 4 and 6, in a state in which no external force is applied, the oil layer 140, the sealing film 130, the adhesive layer 120 and the flexible film 110 are stacked on an upper surface surrounding the hole 180 of the base 150, while only the adhesive layer 120 and the flexible film 110 are stacked in an outer edge portion of the base 150. Accordingly, even despite the use of the adhesive layer 120, the sealing film 130 and the oil layer 140 are further provided adjacent to the hole 180 rather than in the edge portion of the base, the hole 180 is closed by the sealing film 130 when no external force is applied, which means that the flexible film 110 is disposed in the closed position. Also, the base 150 and the sealing film 130 contact each other with the oil layer 140 interposed therebetween, such that they are secondarily sealed due to the viscosity of the oil layer 140. In the closed position, air cannot move outwardly through the hole 180 as shown in FIG. 5.

The sealing film 130 covers the hole 180 in the closed state and the oil layer 140 is disposed between the sealing film 130 and the base 150, so that the movement of air may be completely blocked in the closed state.

As shown in FIG. 5, in a case in which an air suction part of a vacuum generating source is closely coupled to the container surface 170 while surrounding the vacuum valve 100 and air is drawn in from the outside of the vacuum valve 100, a portion of the flexible film 110 in which the sealing film 130 and the oil layer 140 having no connection with the adhesive layer 120 are located is outwardly bulged due to suction force generated by the vacuum generating source. Here, as shown in FIG. 5, the oil layer 140 is divided to allow for the separation of the base 150 and the sealing film 130 and a path may be formed between the divided oil layers 140 such that the hole 180 and the outside of the vacuum valve 100 may communicate with each other.

In FIGS. 5 and 7, the oil layer 140 is uniformly divided. However, the division of the oil layer 140 may not be uniform, such that the oil layer 140 may be present on one surface only and be completely separated from the other surface, or the oil layer 140 may be non-uniformly divided.

An existing vacuum generating source may be used in the embodiment of the invention, and the structure thereof such as that of a vacuum cleaner is well-known, so a description thereof will be omitted.

Since the flexible film 110 and the sealing film 130 are attached to each other, they are outwardly bulged. Accordingly, a seal between the sealing film 130 and the oil layer 140 is broken. Since air passes through the path between the sealing film 130 and the oil layer 140, air within the container is withdrawn therefrom by the vacuum generating source through the hole 180 and the path such that a vacuum exists in the inside of the container.

When the operation of the vacuum generating source stops, force acting on the flexible film 110 is removed. Due to a reduction in elastic restoration force or internal pressure within the container, the flexible film 110 returns to an original state, i.e., the closed position, and thus, the sealing film 130 attached to the flexible film 110 covers the hole 180 again and a seal caused by the viscosity of the oil layer 140 between the base 150 and the sealing film 130 is re-established.

Therefore, the vacuum valve according to the embodiment of the invention has a simplified structure and improved performance.

Hereinafter, a method of manufacturing a vacuum valve according to an embodiment of the present invention will be described in detail.

The flexible film 110, the sealing film 130 and the base 150 are supplied from a roller. After the adhesive layer 120 is formed on the flexible film 110, the sealing film 130 is laminated on the center of the flexible film 110 by using a laminator in operation 200. The center of the flexible film 110 indicates a central portion on the basis of the valve. Further, the flexible film 110, the adhesive layer 120 and the sealing film 130 are attached to each other to thereby form an upper laminate.

The hole 180 is formed in the base 150 using a Thompson machine, and the oil layer 140 is formed by applying oil to a label printing paper around the hole 180 using a label printer and transferring it to a lower laminate in operation 210. The oil layer 140 and the base 150 form the lower laminate.

Taking the hole 180 of the lower laminate as the center, the sealing film 130 of the upper laminate is disposed to cover the hole 180 of the lower laminate. Thereafter, the lower laminate is covered with the upper laminate and their outer edge portions are subjected to a Thompson operation, and thus the vacuum valve 100 is manufactured in operation 220.

In order to attach the vacuum valve 100 to the container, the adhesive layer 160 is formed on a lower surface of the base 150 and a release paper is attached thereto. When used, the release paper is removed therefrom and the adhesive layer 160 is attached to the container.

The above-described manufacturing method allows for the manufacturing of a vacuum valve having a simplified structure and improved performance without an additional device by simplified manufacturing processes and reduced manufacturing costs.

While the present invention has been shown and described in connection with the embodiments, it will be apparent to those skilled in the art that modifications and variations can be made without departing from the scope of the invention as defined by the appended claims.

## Claims

1. A vacuum valve comprising:
a base (150) having a hole (180);
a sealing film (130) attached to a flexible film (110) and covering the hole (180) between the base (150) and the flexible film (110); and
the flexible film (110) attached to an upper surface of the base (150) and the sealing film (130) using an adhesive layer (120),
wherein the flexible film (110) is movable to an open position, and
when the flexible film (110) is disposed in the open position, the sealing film (130) attached to the flexible film (110) causes the hole (180) to be open and an air path is formed between the sealing film (130) and the base (150) such that air passes therethrough,
**characterized in that** the sealing film (130) and the base (150) have an oil layer (140) disposed therebetween.

2. The vacuum valve of claim 1, wherein the adhesive layer (120) has a band shape while being disposed along an edge portion of the base (150).

3. The vacuum valve of claim 1, wherein the flexible film (110) is bulged outwardly in the open position.

4. The vacuum valve of claim 1, wherein the flexible film (110) is formed of an oriented poly propylene (OPP) resin or a polyethylene terephthalate (PET) resin.

5. A method of manufacturing a vacuum valve, the method being **characterized by** comprising:
attaching a sealing film (130) smaller than a flexible film (110) to a central portion of a flexible film (110);
forming an hole (180) in a base (150);
attaching the flexible film (100) attached to the sealing film (130) to the base having the hole (180);
covering the hole (180) with the sealing film (110); and
forming an oil layer (140) on the base (150) having the hole after forming the hole (180) in the base (150), such that the oil layer (140) is disposed between the base (150) and the sealing film (130).

6. A vacuum storage container comprising:
an opening through which an object is inserted;
a sealing unit sealing the opening; and
the vacuum valve according to claim 1 attached to a surface thereof.

## Patentansprüche

1. Vakuumventil, das Folgendes aufweist:
eine Basis (150) mit einem Loch (180);
einen Dichtungsfilm (130), der an einem flexiblen Film (110) angebracht ist und das Loch (180) zwischen der Basis (150) und dem flexiblen Film (110) bedeckt; und
wobei der flexible Film (110) an einer Oberseite der Basis (150) und des Dichtungsfilms (130) unter Verwendung einer Klebeschicht (120) angebracht ist,
wobei der flexible Film (110) in eine offene Position bewegbar ist und
wobei, wenn der flexible Film (110) in der offenen Position angeordnet ist, der an dem flexiblen Film (110) angebrachte Dichtungsfilm (130) bewirkt, dass das Loch (180) offen ist und ein Luftpfad zwischen dem Dichtungsfilm (130) und der Basis (150) gebildet wird, so dass Luft dort hindurch läuft,
**dadurch gekennzeichnet, dass** der Dichtungsfilm (130) und die Basis (150) eine dazwischen angeordnete Ölschicht (140) aufweisen.

2. Vakuumventil nach Anspruch 1, wobei die Klebeschicht (120) eine Bandform hat, während sie entlang eines Kantenteils der Basis (150) angeordnet ist.

3. Vakuumventil nach Anspruch 1, wobei der flexible Film (110) in der offenen Position nach außen gebeult ist.

4. Vakuumventil nach Anspruch 1, wobei der flexible Film (110) aus einem OPP-Harz (OPP = orientiertes Polypropylen) oder einem PET-Harz (PET = Polyethylenterephthalat) geformt ist.

5. Verfahren zur Herstellung eines Vakuumventils, wobei das Verfahren **dadurch gekennzeichnet** wird, dass es Folgendes aufweist:
Anbringen eines Dichtungsfilms (130), der kleiner ist als ein flexibler Film (110), an einem mittigen Teil eines flexiblen Films (110);
Formen eines Lochs (180) in einer Basis (150);
Anbringen des flexiblen Films (110), der an dem Dichtungsfilm (130) angebracht ist, an der Basis mit dem Loch (180);
Bedecken des Loches (180) mit dem Dichtungsfilm (130); und
Formen einer Ölschicht (140) auf der Basis (150), die das Loch hat, nachdem das Loch (180) in der Basis (150) ausgebildet ist, so dass die Ölschicht (140) zwischen der Basis (150) und dem Dichtungsfilm (130) angeordnet ist,

6. Vakuumlagerbehälter, der Folgendes aufweist:
eine Öffnung, durch die ein Objekt eingeführt wird;
eine Dichtungseinheit, welche die Öffnung abdichtet; und
das Vakuumventil nach Anspruch 1, das an der Oberfläche davon angebracht ist,

## Revendications

1. Soupape à vide comprenant :
une base (150) comportant un orifice (180) ;
un film d'étanchéité (130) fixé à un film flexible (110) et recouvrant l'orifice (180) entre la base (150) et le film flexible (110) ; et
le film flexible (110) étant fixé à une surface supérieure de la base (150) et le film d'étanchéité (130) utilisant une couche d'adhésif (120),
le film flexible (110) pouvant être déplacé jusqu'à une position ouverte, et
quand le film flexible (110) est disposé dans la position ouverte, le film d'étanchéité (130) fixé au film flexible (110) produit une ouverture de l'orifice (180) et un chemin d'air est formé entre le film d'étanchéité (130) et la base (150) de telle sorte que l'air passe dans ledit chemin d'air,
**caractérisé en ce qu'**une couche d'huile (140) est disposée entre le film d'étanchéité (130) et la base (150).

2. Soupape à vide selon la revendication 1, dans laquelle la couche d'adhésif (120) a la forme d'une bande quand elle est disposée le long d'une partie marginale de la base (150).

3. Soupape à vide selon la revendication 1, dans laquelle le film flexible (110) est bombé vers l'extérieur dans la position ouverte.

4. Soupape à vide selon la revendication 1, dans laquelle le film flexible (110) est formé d'une résine de polypropylène orienté (OPP) ou d'une résine de téréphtalate de polyéthylène (PET).

5. Procédé de fabrication d'une soupape à vide, le procédé étant **caractérisé en ce qu'**il comprend :
la fixation d'un film d'étanchéité (130) plus petit qu'un film flexible (110) sur une partie centrale d'un film flexible (110) ;
la formation d'un orifice (180) dans une base (150) ;
la fixation du film flexible (110) fixé au film d'étanchéité (130) à la base comportant l'orifice (180) ;
le recouvrement de l'orifice (180) avec le film d'étanchéité (130) ; et
la formation d'une couche d'huile (140) sur la base (150) comportant l'orifice après la formation de l'orifice (180) dans la base (150), de telle sorte que la couche d'huile (140) soit disposée entre la base (150) et le film d'étanchéité (130).

6. Contenant de stockage sous vide comprenant :
une ouverture par laquelle un objet est inséré ;
une unité d'étanchéité étanchant l'ouverture ; et
la soupape à vide selon la revendication 1 fixée à une surface dudit contenant.
